# EUROPEAN PATENT APPLICATION

(11) **EP 1 859 915 A1**
(43) Date of publication of application: **28.11.2007**
(21) Application number: 07380127.6
(22) Date of filing: 08.05.2007
(51) Int. Cl.: B29C 47/00, E04G 9/05

(54) **Board for formworks and manufacturing system**

(30) Priority: 23.05.2006 ES 200601352
(71) Applicant: Alexia Inversiones S.L., 12003 Castellon (ES)
(72) Inventor: Bagant Gimenez, Fernando, 12005 Castellon (ES)
(74) Representative: Carvajal y Urquijo, Isabel

(57) **Abstract**

The invention relates to a board and to the manufacture of said board, carried out in a polymeric or plastic material to which other materials have been added in different proportions, such as ground materials of a plant or organic origin, as well as strategically positioned reinforcing fibers (1), for the purpose of meeting the physical and mechanical requirements demanded of the part. The polymeric or plastic board thus carried out allows easy handling, without any risk of splintering, is susceptible of receiving nails, resists blows and impacts, is waterproof, allows being manufactured in any color, being used several times and being completely recyclable.

## Description

### Field of the Invention

The present invention relates to a board of polymeric material for forming concrete and other uses and to a system for manufacturing it by an automatic process.

### Background of the Invention

In the manufacture of formworks for forgings or others, it is necessary to support the concrete mass in addition to the metal reinforcing bars with elements supporting both of them, until achieving the setting or consolidation of the concrete.

Support boards have been made of very diverse materials, such as wood, iron or even foamed plastic, but all of them have several drawbacks such as excessive weight, corrosion, very low adaptability, continuous maintenance, handling difficulty, indentations and marks on the concrete surface, among others, which makes all these numerous problems remain unsuitably solved.

A material satisfactorily complying and solving all the problems in concrete forming as a whole is still not available.

### Description of the Invention

The proposed invention has been designed to solve the aforementioned drawbacks based on a simple yet effective solution based on using polymers the final properties of which have been suitably improved by adding compatible aggregates to them, whereby the resulting end product is a hybrid material with better properties than the chosen initial polymer

A board suitable for forming concrete or for other uses is continuously produced in the manufacturing process by means of an extruder which is fed polymer pellets or powder.

The chosen polymer, as well as the added complementary products the purpose of which is to improve the features of the end product, may significantly vary.

The board can have different widths, lengths and thicknesses, it being possible to manufacture planar or curved configurations, with different degrees of surface finishing, such as smooth, grooved, as well as with several drawings, being able to have any color both on the surface and in the mass.

These materials, polymers and aggregates are introduced in a machine or extruder provided with a shaping nozzle or mold so as to produce a formwork board with the desired final configuration and appearance. The measurements of the part shall be determined by the shapes and size of the extrusion nozzles and by the action of an automated length cutting system. The entire process is continuous and automated, which ensures a high and permanent quality level.

Any of the polymers currently used in the thermoplastic material transformation industry can be used as polymers.

High and low density polyethylene, polypropylene, polyamides in any of their versions, PVC, polystyrene, polycarbonate, ABS, PAN, and the like can be used as a polymer. All of them can be prepared in the form of pellets or powder, therefore being able to be led and dosed into the extruder.

Wood, rice husk, sisal, hemp, century plant, cactus, bamboo, among other products, can be used as aggregate material. All these aggregates are subjected to a rigorous prior cleaning process, a grinding process until the desired micronage, a process for eliminating the water they contain, a chemical treatment process with the compatibilizing additives making them compatible with the polymer to be added and vacuum packaging until their use in the extruder. The initial polymer will thus be supplemented in its final properties with the addition of aggregates, the latter possibly being incorporated in variable percentages, from ten up to eighty parts by weight, such percentages not being limiting but according to the type of polymer as well as the type of aggregate.

Furthermore and according to the stress the board will be subjected to with respect to the weight of concrete plus the corresponding iron mat reinforcement, reinforcing fibers, such as glass fiber, carbon or aramid fiber, among others, can be introduced in very specific points of said polymeric board.

These reinforcing fibers, suitably prepared with a compatibilizing additive and specifically treated, will be directly introduced inside the extrusion nozzle or mold, such that they are incorporated to the molten polymer+aggregate mass, forming a whole or single group, the reinforcing fibers providing their known tensile strength and rigidity properties.

This material thus formed by polymer+aggregate+reinforcing fiber has outstanding and unique features in the market of formwork boards, the following features being emphasized: excellent strength, lightweight, great durability, possibility of different surface finishing textures, different colors, susceptible to receiving nails, non-corrodible and environmentally friendly because it is completely recyclable.

### Brief Description of the Drawings

A series of drawings is very briefly described below which aid in better understating the invention and which are expressly related to an embodiment of said invention set forth as a non-limiting example thereof.

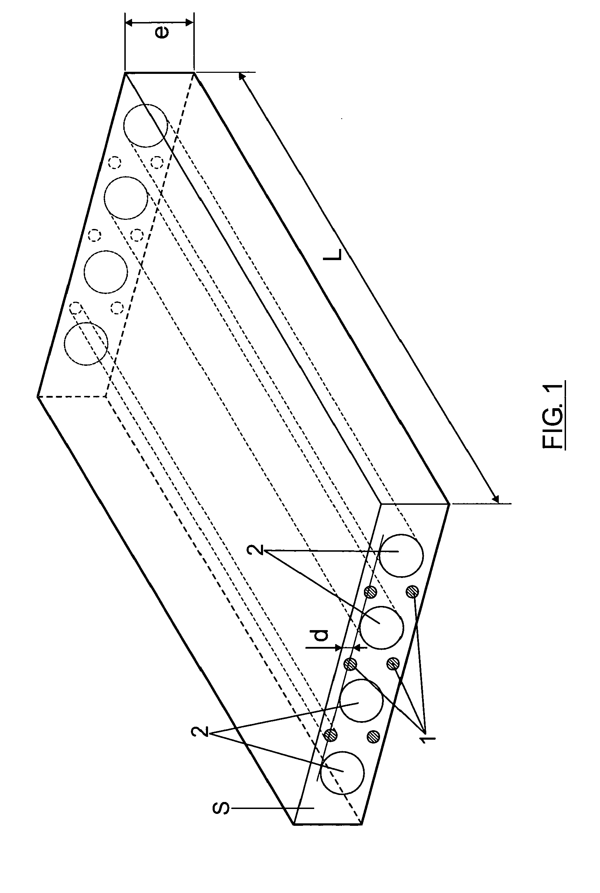

Figure 1 shows a schematic view of a formwork board.

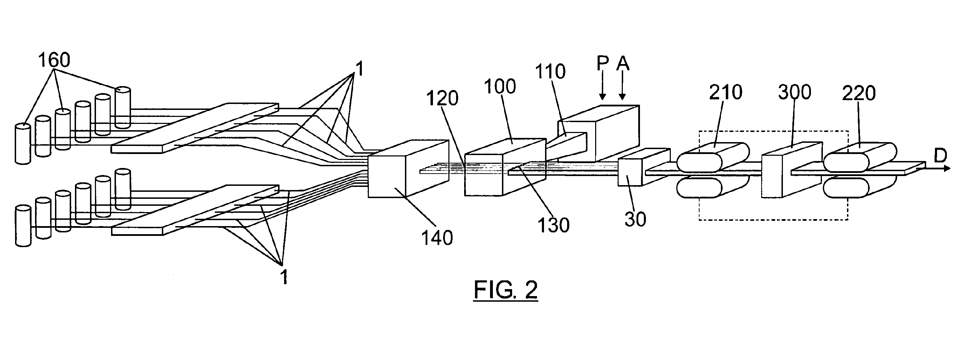

Figure 2 shows a scheme of the system for manufacturing a formwork board.

### Description of a Preferred Embodiment of the Invention

The manufacture of a polymeric formwork board requires the combination of several different materials.

Each of the raw materials has its own treatment and in most cases, they are recovered or recycled products, therefore the present invention contributes to a great extent to preserving the environment and exploiting raw materials.

The cleaning, separating, grinding, dehydrating and storage phases until their transport to the extrusion line will be normal.

The extrusion line will be provided with feed, extrusion, mold, cooling, traction and cutting. The polymer P as well as the organic aggregate A which has been duly treated chemically for its complete integration with the polymer will be fed at very specific points of the line, and the reinforcing fiber (1) formed mainly by suitable roving or continuous thread for this purpose will be added right into the mold.

At the outlet of the mold and after it is cooled, the three fundamental materials, polymer P +aggregate A +reinforcing fiber R are completely hardened and correctly positioned with the final shape of the panel or board.

The extraction unit acts and the board is finally cut to the desired length after cooling.

Therefore, a first aspect of the invention relates to a board for formworks characterized in that the board is manufactured by extrusion, said board comprising:
a polymer P;
an aggregate A in a proportion comprised between 50-90% by weight of the total weight of the board;
so as to obtain a hybrid product formed by a mixture of polymer P + aggregate A having a greater rigidity than polymer P.

The most usual proportions by weight of polymer P/aggregate A are 50/50, 40/60, 30/70, 20/80 and 10/90, although intermediate proportions are logically also valid.

The board can further comprise a plurality of longitudinal reinforcements (1) to increase the mechanical properties of the board. These reinforcements (1) can extend throughout the entire length of the board.

The reinforcements (1) can also be uniformly distributed throughout the width of the board.

On the other hand, the board can have a thickness t, and the reinforcements (1) can be located in a stratum or level located at a distance d from a surface of the board, where d≤1/3t. The reinforcements can be arranged in strata or levels close to the surfaces of the board, because it is in these areas close to the sides where the largest tensile and compression stresses occur when the board is under bending stress. The boar can further have more than one level with reinforcements close to one surface or close to both surfaces.

The reinforcements (1) of the board can be selected from glass fiber rovings, carbon fibers, aramid fibers and combinations thereof, i.e. a single board can contain different types of reinforcements.

Additionally, the board can further comprise a plurality of longitudinal lightening holes (2). These holes (2) can extend throughout the entire length of the board. The holes (2) can also be distributed uniformly throughout the width of the board.

These holes (2) can be located in a stratum selected from a middle stratum or level and a neutral stratum or level of the board. A neutral stratum or level is understood as a stratum or level in which the midline of the board is located, i.e. where there is no tensile or compression stress when the board is under bending stress.

In the board of the invention:
polymer P can be an organic polymer selected from high density polyethylene, low density polyethylene, polypropylene, polyamide, PVC, polystyrene, polycarbonate, ABS, PAN and combinations thereof;
aggregate A can be a natural aggregate selected from wood, rice husk, sisal, hemp, century plant, cactus, bamboo and combinations thereof.

In one configuration of the invention, polymer P is polypropylene and aggregate A is wood.

The board of the invention can have a shape selected from planar, curved and combinations thereof.

A second aspect of the invention relates to a system for manufacturing a board like that described above by extrusion by means of an extrusion line. Said system comprises:
an extruder (100) having:
   first feed means (110) so as to be fed with a polymer P and an aggregate A;
   an outlet provided with a shaping nozzle (130) so as to generate a continuous board having a cross section S determined by the shape of the shaping nozzle (130);
   first removal means (210) to remove the continuous board according to direction D perpendicular to the cross section S of the board;
   cutting means (300) to cut the continuous board to a selected length L and obtain board units;
   second removal means (220) to remove the board units.

The system can further comprise cooling means (30) between the extruder (100) and the first removal means (210) to cool the board.

The extruder (100) can further comprise second feed means (120) so as to be fed with reinforcements (1) in the form of fiber from reels (160).

Additionally, the system of the invention can further comprise conditioning means (140) between (100) and the reels (160) to heat and impregnate the reinforcements (1) in the form of fiber.

## Claims

1. A board for formworks **characterized in that** the board is manufactured by extrusion, said board comprising:
a polymer P;
an aggregate A in a proportion comprised between 50-90% by weight of the total weight of the board;
so as to obtain a hybrid product formed by a mixture of P + aggregate A having a greater rigidity than polymer P.

2. The board according to claim 1, **characterized in that** it further comprises a plurality of longitudinal reinforcements (1) to increase the mechanical properties of the board.

3. The board according to claim 2, **characterized in that** the reinforcements (1) extend throughout the entire length of the board.

4. The board according to any of claims 2-3, **characterized in that** the reinforcements (1) are distributed uniformly throughout the width of the board.

5. The board according to any of claims 2-4 having a thickness t, **characterized in that** the reinforcements (1) are located in a stratum located a distance d from a surface of the board, where d≤1/3e.

6. The board according to any of claims 2-5, **characterized in that** the reinforcements (1) are selected from glass fiber rovings, carbon fibers, aramid fibers and combinations thereof.

7. The board according to any of claims 1-6, **characterized in that** it further comprises a plurality of longitudinal lightening holes (2).

8. The board according to claim 7, **characterized in that** the holes (2) extend throughout the entire length of the board.

9. The board according to any of claims 7-8, **characterized in that** the holes (2) are distributed uniformly throughout the width of the board.

10. The board according to any of claims 7-9, **characterized in that** the holes (2) are located in a stratum selected from a middle stratum and a neutral stratum of the board.

11. The board according to any of claims 1-10, **characterized in that**:
polymer P is an organic polymer selected from high density polyethylene, low density polyethylene, polypropylene, polyamide, PVC, polystyrene, polycarbonate, ABS, PAN and combinations thereof;
aggregate A is a natural aggregate selected from wood, rice husk, sisal, hemp, century plant, cactus, bamboo and combinations thereof.

12. The board according to any of claims 1-10, **characterized in that** polymer P is polypropylene and aggregate A is wood.

13. The board according to any of claims 1-12, **characterized in that** the board has a shape selected from planar, curved and combinations thereof.

14. A system for manufacturing by extrusion a board according to any of claims 1-13 by means of an extrusion line, **characterized in that** said system comprises:
an extruder (100) having:
first feed means (110) so as to be fed with a polymer P and an aggregate A;
an outlet provided with a shaping nozzle (130) so as to generate a continuous board having a cross section S determined by the shape of the shaping nozzle (130);
first removal means (210) to remove the continuous board according to direction D perpendicular to the cross section S of the board;
cutting means (300) to cut the continuous board to a selected length L and obtain board units;
second removal means (220) to remove the board units.

15. The system according to claim 14, **characterized in that** it further comprises cooling means (30) between the extruder (100) and the first removal means (210) to cool the board.

16. The system according to any of claims 14-15, **characterized in that** the extruder (100) further comprises second feed means (120) so as to be fed with reinforcements (1) in the form of fiber from reels (160).

17. The system according to claim 16, **characterized in that** it further comprises conditioning means (140) between the extruder (100) and the reels (160) to heat and impregnate the reinforcements (1) in the form of fiber.
